# EUROPEAN PATENT SPECIFICATION

(11) **EP 1 442 446 B1**
(45) Date of publication and mention of the grant of the patent: **20.08.2008**
(21) Application number: 02732260.1
(22) Date of filing: 24.05.2002
(51) Int. Cl.: G09F 13/18, F21V 8/00

(54) **IMPROVEMENTS IN DISPLAY SIGNS, DECORATIVE LIGHTING, AND ORNAMENTS FOR HOLIDAY SEASONS**
ORNAMENTE DESIGNS ODER SCHILDER UND METHODEN FÜR DIE PRODUKTION DER ORNAMENTEN,DER DESIGNS ODER DER SCHILDERN
AFFICHAGE, ECLAIRAGE DECORATIF ET ORNEMENTS FESTIFS AMELIORES

(30) Priority: 26.10.2001 CA 2360186
(43) Date of publication of application: 04.08.2004
(73) Proprietor: Derose, Anthony, Caledon East, Ontario L0N 1E0 (CA)
(72) Inventor: Derose, Anthony, Caledon East, Ontario L0N 1E0 (CA)
(74) Representative: Howard, Paul Nicholas
(86) International application number: PCT/CA2002/000753
(87) International publication number: WO 2003/036597

(56) References cited:
- EP-A- 0 350 154
- EP-A- 0 417 359
- DE-A- 10 056 580
- DE-U- 29 514 771
- GB-A- 2 211 012
- GR-A- 98 100 089
- US-A- 1 959 616
- US-A- 2 211 015
- US-A- 4 715 137
- US-A- 4 894 757
- US-A- 5 365 411
- US-A- 5 743 616
- US-A- 5 786 665
- US-A- 6 082 886
- US-B1- 6 275 338

## Description

### FIELD OF THE INVENTION

This invention relates to an improvement and simplification in ornaments, for example Christmas tree lights, or any ornaments which might be used during holiday seasons. In one embodiment the ornaments are strung together as Christmas lights for decorating homes and trees or the like. In another embodiment the edge lighting may be used for displaying signs or designs.

### BACKGROUND OF THE INVENTION

It is heretofore well known to utilize Christmas lights to decorate the interior or exterior of one's home during the holiday seasons. Ornaments for trees are also well known. There are some definite problems which exist with present Christmas ornaments. The actual lighting elements or bulbs may be very unreliable. Therefore, from season to season one can never be sure of the operation of the ornaments. Many lights are strung together in a series circuit and therefore require by nature that each and every bulb be installight source and preferred LED and lit. When a bulb is burnt out it may be necessary for the user to complete a continuity check on each bulb to determine which bulb is in fact burnt out. This is a very time-consuming and frustrating process. In fact known Christmas tree lights are so unreliable it is frequently the case that newly purchased strings of lights will not operate. Of course, the greater frustration comes into play when lights are strung about the perimeter of a home adjacent the roof and the trouble shooting must be done on a ladder.

It is also well known to provide lighted display signs for advertising purposes. These signs may be lit by conventional methods.

It is not new to form ornaments from clear or coloured materials with a lighting element inserted in the interior thereof. United States Patent No. 1,410,336 includes a star-shaped ornament for a Christmas tree within which an electric light bulb is placed. However, this ornament is manufactured by a distinct number of elements and does not include a single body or piece of material of predetermined shape and thickness within which an opening is provided. This is also the case with United States Patent No. 2,132,297 which describes a compound structure including a chime utilized as for example in a decorative head piece.

United States Patent No. 19,859 (Reissued), originally United States Patent No. 1,977,126, describes an ornamental device which is illuminated and utilized in lighting Christmas trees and, holiday decorations. The ornaments are simple, light weight and compact. An envelope is provided with a number of openings wherein lighting elements 5 are inserted. A socket 3 is provided on the bottom of the envelope in order for the entire assembly to engage the electrical connector for the array of lighting. It is stated within the patent that the source of illumination may include other electrical devices such as neon tubes.

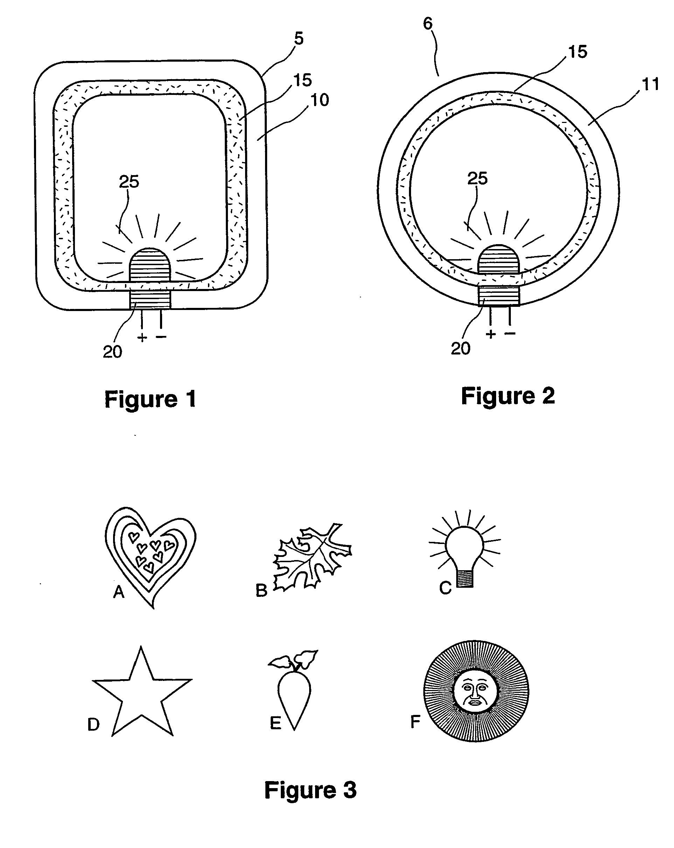

United States Patent No. 4,654,766, issued March 31, 1987, describes a bulb seat in a string of bulbs. As best seen in Figures 1, 2 and 3, the invention describes ornamental or decorative bulbs or strings of bulbs wherein the bulbs may be made smaller. Further, the bulb seat structure is manufactured from transparent material, of various colours and includes an opening to receive a bulb therein. The unit is assemblight source and preferred LED by inserting the bulb into the opening and bending the conductors into the grooves provided in the perimeter of the ornament. These conductors are then connected to a twisted pair of wires. It is suggested that the outer shape of the bulb may be of any decorative form, whether as a stand-alone bulb or a string of bulbs. The patent at line 62 of column 2 states that the bulb may be replaced with a light-emitting diode.

United States Patent No. 4,675,575 describes the use of Christmas tree strings including various AC and DC control circuits for driving the light-emitting diodes provided therewith for providing alternating effects between the various colours of the bulbs. The claims define a miniature light bulb for strings of Christmas tree lights including a light-emitting diode, an envelope surrounding at least a portion of the light-emitting diode, and light conducting spheres contained within the envelope for dispersing and diffusing the light.

United States Patent No. 1,959,616 describes illuminated ornaments and signs. European Patent Application No. EP-A-0350154 describes a light source comprising an elongate prism. United States Patent No. 5,743,616 describes an LED illuminated image display. United States Patent No. 4,715,137 describes an illuminated display with beaded light-transmitting surface. United States Patent No. 5,365,411 describes an LED illuminated display sign.

United States Patent No. 4,870,325 teaches a lighting display using LEDs which are powered by a particular circuit as described in the patent to enable flashing or oscillating. There is no particular discussion in this reference as to the structure of the lighting elements. This reference discusses LEDs and their use in lighting. This patent sets out at columns 1 and 2 many of the background problems with incandescent lighting including the power consumption of the well-known Christmas lighting systems. The patent therefore teaches a lighting display device including a string of LEDs connected in parallel, at least one of the LEDs being bi-colour diodes included in an involved pulsing circuitry and switching mechanism which gate the LEDs to on and off positions.

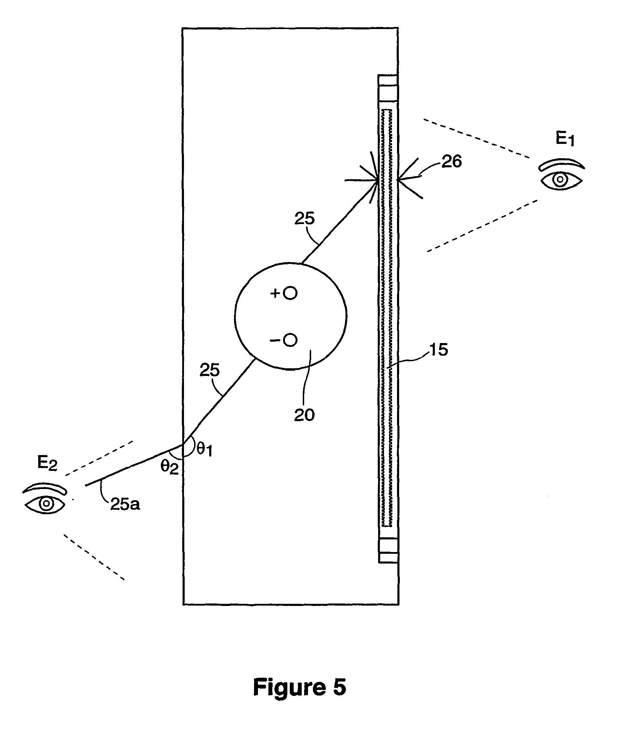

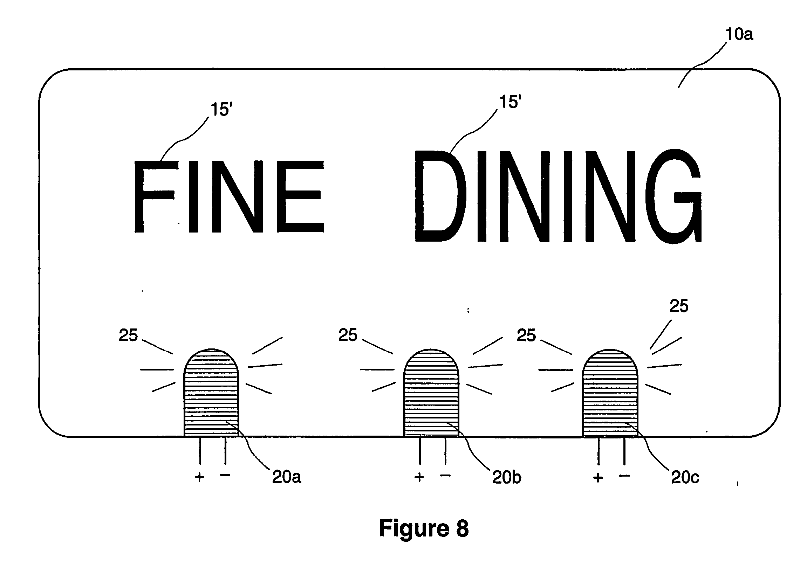

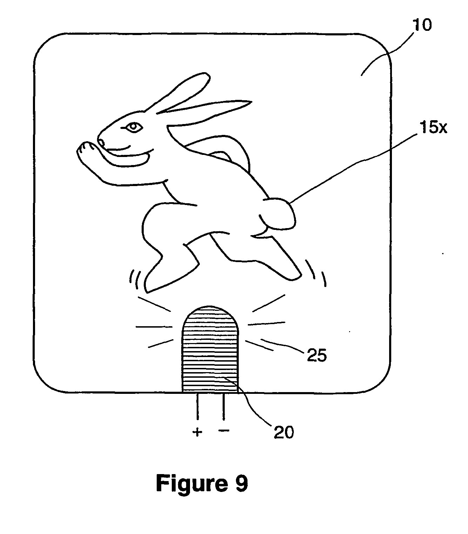

United States Patent No. 4,931,227 describes a transparent body having openings therein as seen in Figures 5, 6, 8 and 9 wherein a matrix of polymethylmethacrylate is utilized for signs incorporating edge-lighting technology. This particular patent improves edge lighting by utilizing light-reflection material for obtaining a three-dimensional effect. The material has a number of openings or holes extending therethrough formed by placing threads in pre-determined positions while molding the sign, display sheet, or the like, and then pulling the threads through leaving the openings within the material. The threads may be alternatively left in the material when formed having no particularly pre-defined route left to the designer. For the light to provide the most desirable reflection pattern, round openings are recommended. Alternatively, the holes may be coloured using various pigments and dies during the forming process. As described in Example 2 at column 6, line 24, the ornament may be a mobile which is edge-lit. One example is seen in Figures 8 and 9 wherein the edge lighting is produced by a fluorescent tube to obtain various effects at wave-like openings 2 and 3.

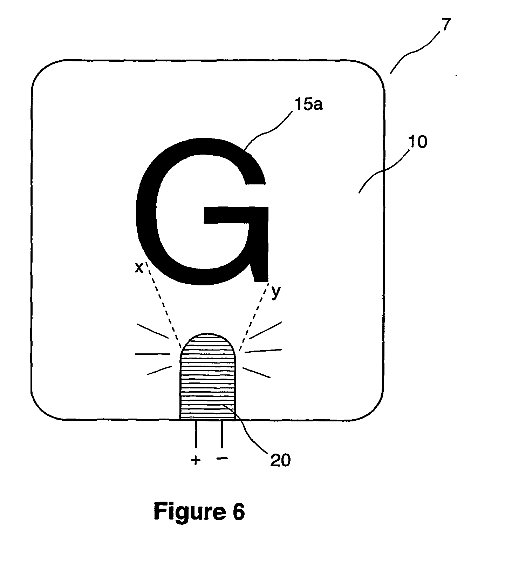

United States Patent No. 4,965,701 describes the use of strings of spaced bulbs contained within translucent spheres which may also have varying shapes including stars, bells, pyramids, cubes and the like as best seen in Figure 6. The ornament is constructed by two interfitting halves which contain therebetween the bulbs. Each of the illumination members is translucent to enhance the illumination from an alternative fiber-optic cable which extends from an illumination member 27.

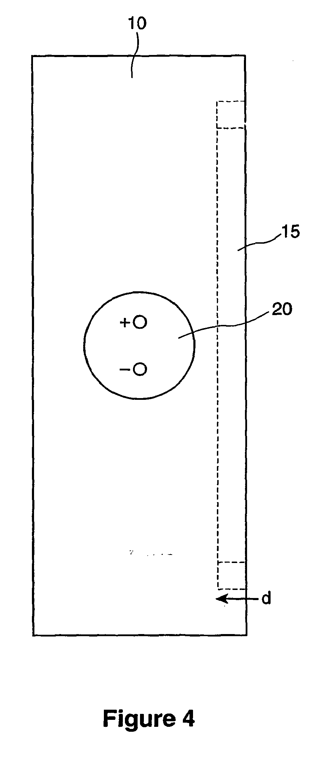

United States Patent No. 4,213,407 teaches a light string for use with a small Christmas tree. The light string is seen in Figures 2 and 4, and includes a plurality of light-emitting elements which may be light-emitting diodes inside a transparent or translucent cover 35. The cover is shaped to give the appearance of a miniature Christmas-tree bulb in this description. The unit may be powered from a transformer or batteries which are the preferred source of power.

United States Patent No. 5,315,492 describes a window display ornament including LEDs as best seen in Figure 5. Similarly, United States Patent No. 5,239,450 teaches the use of LEDs for use in buttons with a pre-determined message provided on a flat disk of material.

United States Patent No. 5,249,109 teaches optical fibers used as ornaments in combination with an end lighting element on the bundles thereof.

United States Patent No. 5,495,147 teaches the use of a string of LEDs connected in parallel utilized for decoration and the like including a regulated power supply to provide constant current at a constant voltage as received from an AC line including a step-down transformer to step down the voltage in the range of between 3 and 5 volts AC, a rectifier for rectifying that voltage, a voltage regulator couplight source and preferred LED to the output of the transformer and a zener diode couplight source and preferred LED between the rectifier and the voltage regulator for limiting the voltage fed into the voltage regulator from the rectifier.

Many of the devices described above especially since they include LED's provide a pin point light, that is to say a very sharp glaring point of light for Christmas ornaments and decorations. It would therefore be desirable to scatter the light from a light source in a pleasing manner through some of the surface area of the ornament being observed.

Nowhere within the prior art to the best of applicant's knowledge is there found; an ornament for holiday seasons; a sign, such as an emergency sign, or a design, such as a company logo; which may be lit by a reliable light source such as light emitting diode by scattering the light produced at much reduced power consumption and substantially reduced operating temperature. It is therefore desirable to provide an ornament/design/sign, in one embodiment suitable for decorating during a holiday season, which would enhance the lighting effectiveness thereof when compared to of a LED on its own.

It is therefore a primary object of the invention to provide a suitable sign, ornament or design which complements the use of a lighting element to provide much improved pre-selected dispersion of light throughout the sign, design or ornament.

It is a further object of this invention to provide an ornament/sign/design which is easy to manufacture and simple to install and maintain .

It is yet a further object of this invention to provide a sign, ornament or design which is rugged and reliable with an extended life expectancy.

Further and other objects of the invention will become apparent to those skiled in the art when considering the following summary of the invention and the more detailed description of the preferred embodiments illustrated herein.

### SUMMARY OF THE INVENTION

According to a primary aspect of the invention there is provided a string of ornaments as defined in claim 1. The ornament/designs are for decorative purposes, for example Christmas tree ornaments or the like, said ornament/design comprising a solid matrix of material providing a body preferably having a top, bottom and plurality of sides, and having a predetermined shape, preferably formed proximate the top thereof and extending toward the bottom thereof, said body having at least one light scattering translucent surface, groove and/or ridge formed therein, and preferably when the body is providing an ornament, extending about at least some of the perimeter of the body and in one embodiment substantially the entire perimeter of the body, said surface, grooves , ridges or characteristics providing a design, shape, image, letter or character preferably which represents the holiday season, for example a candle, an image of Santa Claus, a crucifix, a heart or the like, all formed by forming and preferably etching the surface, grooves, ridges or characteristics into the matrix of the body of the ornament/design said body having disposed therein and preferably proximate at least one side thereof an opening having contained therein in use at least one light source, and preferably at least one light emitting diode (LED), which may be glued or molded in place within the opening, or alternatively loosely fit within the opening, said at least one light source including electrical leads extending to an electrical conductor or alternatively to a printed circuit board for the powering thereof; said body in preferred embodiments being manufactured from various materials such as polymethylmethacrylate, acrylic, resins, Lexan® or the like, preferably materials which appear transparent are utilized; the material being of any suitable colour for the holiday season such as amber, red, green, blue, clear, purple, yellow, orange or any shades or combinations thereof; in one embodiment the etching of the body of the ornament/design or sign may further comprise a second etched surface, groove or ridge within the perimeter of the first etched surface groove or ridge, said light source and preferred LED being positioned so as to light the ornament, said light exiting the light source and being dispersed by said light scattering translucent at least one etched surface, groove or ridge so as to create a dispersion of the light which would remain undispersed had the etched surface, grooves , ridges or characteristic not been provided.

According to yet another aspect of the invention, the holiday season ornaments comprise a body having provided therein a translucent etched or otherwise formed light scattering surface, ridge or groove, in one embodiment outlining the form of a figure, for example an animal figure, a religious symbol for example a cross, Star of David, crescent moon or the like, an international symbol, stars, or any other well known symbol including Santa Claus, a heart, a candle or the like, wherein said body may be of any desired shape for example, in the shape of a pine cone, a sphere, a hexagonal, a rectangle, a diamond, a pyramid, a cross, an animal shape, for example, a reindeer, a lamb, a camel, or the like, as a flat planar, body or a three dimensional body, said body containing; in a preferred embodiment light scattering elements such as metal shavings, bubbles, or other light scattering elements, and at least one opening for at least one light emitting diode which is positioned so as to light the body with the light exiting from the light emitting diode and being dispersed preferably by said light scattering means, and by said at least one translucent etched or otherwise formed surface, groove or ridge so as to create a dispersion of the light from the body which would remain undispersed had the translucent etched surface, groove, ridge and when present the light scattering means not been provided. In one embodiment for example, the body may be in the shape of a pine cone with the surface of the pine cone shaped body being translucent and being formed or etched so as to simulate the appearance of the rough surface of the perimeter of an actual pine cone. Other fruits may also be similarly presented.

In one embodiment ornaments embodying the present invention may be linked through suitable electrical conductors to juxtaposed ornaments so as to create a string of ornaments for decorative lighting purposes. In another embodiment the string of lights so provided may be powered by a transforming circuit for alternating current or by a battery for direct current.

According to yet another aspect of the invention there is provided a method of manufacturing ornaments/designs from a matrix of clear material such as acrylic, methylmethactylate, Lexan® or the like, said method comprising:
(1) identifying a suitable material which may be formed or etched with at least one translucent surface, groove, or ridge:
(2) forming the ornament/design from said material, in one embodiment cutting the ornament/design from a sheet of predetermined thickness and in another embodiment molding said ornament/design in a preferred predetermined shape such as a rectangular or a bell shape, a Santa Claus shape, a cross shape, the shape of a bulb, the shape of a Christmas tree, the shape of fruit, the shape of leaves, the shape of stars, the shape of circles, or the like;
(3) forming at least one translucent preferably etched surface, groove or ridge within the perimeter of the ornament/design/sign so as to defuse, refract and otherwise disperse any incident light falling on or near said etched surface, groove or ridge; in one embodiment etching the material adjacent the perimeter of the shape of the ornament proximate at least one location and preferably at a second location, or for example in the case of a leaf providing the veining outline of a leaf in etched form, or as in the case of Santa Claus providing the facial characteristics with etching or alternatively with fruit providing the etching at the most optimal locations which best simulates the fruit;
(4) preferably forming at least one opening in the ornament/design and, preferably inserting a light source and preferably at least one LED within the opening;
(5) providing conductors to engage the light source for providing power to the ornament/design;
wherein the light incident upon the translucent preferably etched surfaces, grooves , ridges or characteristics within the design or ornament will scatter, disperse, refract or reflect enhancing the effective lighting and eye appeal of the design/ornament to a much greater extent than any substantially clear ornament.

In another embodiment the apparatus or method is utilized to manufacture ornaments, for example for Christmas, Halloween or Valentine's Day in many suitable shapes such as in a shape of hearts, Christmas trees, pine cones; pineapples or the like of many different and combinations of colours and variations thereto which ate adapted to be connected with a power supply in a modular fashion for example via plug connectors or the like which allows for simple changing of each ornament, for example the Christmas tree ornaments and their positions in an array.

According to yet another aspect of the invention there is provided an ornament comprising a matrix of clear transparent material such as methylmethacrylate, Lexan®, acrylic or the like, said ornament when suitably oriented having a top and bottom or alternatively being of a predetermined shape, for example spherical, in one embodiment preferably said top and bottom of said ornament and at least said top being formed into the desired shape of the ornament such as a Christmas tree, a circle, a piece of fruit, a Santa Claus, or the like and having a predetermined perimeter, preferably said predetermined perimeter being disposed proximate an outer edge of said top and said bottom having therebetween disposed at least one side, said ornament and preferably said at least one side, having disposed therein at least one opening, said at least one opening for having installed therein a light source such as a light-emitting diode or the like, preferably the top and in some embodiments the bottom of the ornament substantially duplicating the shape of the ornament, said ornament having an etched or otherwise formed light scattering surface, alphanumeric character(s), design(s), or pleasing shape(s) therein, for example if the ornament were shaped as a leaf the design may include the veins of the leaf, if the design were in the shape of the figure of Santa Claus or the head of Santa Claus a likeness would be contained on the top therein , formed and preferably etched into the matrix enhancing the face or figure of Santa Claus, wherein said etching may further comprise at least one compatibly shaped etched design formed by providing in one embodiment at least one groove or ridge portion, or at least one etched surface, extending in predetermined directions to provide said etched design, wherein the material adjacent the at least one surface, groove or channel or the like is substantially translucent or non-transparent so as to substantially disperse any incident light thereon from the light source in use, the light striking said at least one etched surface, groove, design or the like causing light to disperse and/or scatter from said design to a much greater extent than light passing through a matrix of transparent material, said dispersion or scattering of the light thereby creating a pleasing and more effective ornament.

In a preferred embodiment the ornament may be of any colour such as amber, red, blue, green, turquoise, orange, purple, or the like, or combinations thereof, and the desired etching being an off shade of said ornament colour. In another embodiment said ornaments include electrical connections which are connected to a conducting lead such as a pair of wires wherein said pairs of wires extend to like ornaments in series or parallel (preferably using a modular plug like format) thereby creating a string of ornaments suitable for decorating a Christmas tree or the exterior or interior of a home.

In another embodiment the ornaments linked together are dissimilar and complementary. For example, a string of ornaments may be provided which are formed as described above but which include dissimilar shapes. A string may include a leaf, a banana, a cherry, a bell, etc. all linked together in a string to provide a pleasing set of lights. In another embodiment, the ornaments may be identical and in one embodiment flashing. In another embodiment the ornaments may be identical but of alternative colours or colour combination or the like, as described above. Some ornaments may contain more than one light source of different colours which may be alternated for a different effect.

Any of these sets of ornaments described above may be powered by an AC circuit or by a battery circuit in a conventional power supply, or by wind, solar, or alternative power.

According to yet another aspect of the invention there may be provided an ornament for the holiday seasons comprising a matrix of clear transparent material such as methylmethacrylate, acrylic, a resin or a Lexan® or the like, wherein said ornament has at least one light scattering translucent surface, ridge, or channel formed or preferably etched therein or about the perimeter thereof, said ornament including at least one opening containing a lighting source in use (preferably at least one LED), wherein when lit said lighting source will direct incident light within the ornament upon the light scattering translucent surface, channel or ridge so as to create a more uniform dispersion of light from the ornament as opposed to a point source of light. In a preferred embodiment the ornaments may be strung together with similar or dissimilar ornaments of alternative shape, colour and design as previously described.

In essence therefore, my invention relates to the provision of an etched or otherwise formed translucent light scattering design, lettering, or shape within a matrix contained in the body of an ornament, said ornament having included therewith at least one opening, said opening having contained therewith at least one light source and preferably a light-emitting diode, wherein light emerging from the light-emitting diode incident upon the light scattering translucent design lettering or shape of the ornament will be enhanced to a much greater extent than any light emanating from the transparent portions of the ornament.

The string of ornaments of the present invention is not limited by shape, form, colour, or size whatsoever and may take the form by way of example only but not limited to (i) a Christmas tree string of lights; (ii) a novelty item, for example a necklace; (iii) a promotional item; (iv) a message; (v) a design; (vi) a game; and (vii) toys of all kinds which may take any possible shape or size in 2 or 3 dimensions.

The translucent preferably etched light scattering surfaces, ridges, and grooves can be manufactured by injection molding, vacuum forming, die casting, extruding; manual or computerized; routering, drilling, and/ or sawing; chemical etching by solution or the like, sandblasting, engraving or any other technique known in the art. A uniform pattern may be provide throughout the design or the pattern may vary from an initial larger spacing gradually decreasing or alternatively increasing. In one example the etching may occur on one side of the ornament only. Alternatively it may occur on two or more sides of the shape/design. The etching can be very light or aggressively deep , and of various sizes and widths.

Light emitting diodes are the preferred light source or a low power consumption performance equivalent which may be powered by A/C current transformed to DC, direct D/C current from a conventional battery source such as disposable batteries or the like, or 12 volt, or solar power or wind power or the like.

The design/ornament described may further comprise in one embodiment alight source of at least one or more colours which in co-operation with a switching device may change the colour of ornament, message or design over time. For example Christmas ornaments may change colour as opposed to or in addition to flashing. An audible alarm may also be added.

The light source may be embedded into the design/ornament when formed, or as an additional step or placed adjacent the surface of the design/ornament when a frame designed to hold the light source in place is used. Further, the light source can also be placed on any angle in/on the design/ornament to maximize the amount of light being scattered internally. The angle can vary to allow the light to disperse for the selected, ornament or design.

Custom coloring may be achieved by tinting the acrylic, Lexan®, or like comparable material prior to manufacturing, for example injection molding to customize various colored designs/ornaments. Further, various light reflecting/scattering media such as mirror like panels, metal flakes or panels such as chrome, steel, stainless steel, aluminum or the like can be embedded into the design/ornament or placed on the outer edge, the back the centre or middle thereof. In one embodiment metal flakes or metallic material is placed into the design ornament during injection molding.

In another embodiment for a display sign a housing, preferably modular including an opposed rail assembly is provided having inserted therein a preferably substantially concave reflective panel adjacent said sign in order to reflect light and enable use of less LED's while achieving a very satisfactory back light depending on the design/ornament application.

The reflective panel may be concave, convex, or flat and either a smooth glass like material or corrugated material all of which may be slid into the preferred modular housing adjacent the sign or alternatively may be glued, clipped or otherwise fastened. The design/ornament may have a mirror like coating or reflective veneer like material placed thereon during or after manufacturing having various textures for example ribbed, corrugated or any texture that resects/disperses light satisfactorily.

According to yet another aspect of the invention there is provided a method of manufacturing ornaments/designs from a matrix of clear material such as acrylic, methylmethacrylate, Lexan® or the like, said method comprising:
(1) identifying a suitable material which may be molded, and when molded having at least one translucent light scattering surface, groove, or ridge;
(2) placing at least one light source and preferably at least one raw diode in a mold for an ornament/design said mold structured to provide the final shape of the desired product and locating said light source and preferred raw diodes at positions wherein a light source is desired for the desired product;
(3) introducing said suitable material into said mold to form the ornament/design in a preferred predetermined shape such as a rectangular or a bell shape, a Santa Claus shape, a cross shape, the shape of a bulb, the shape of a Christmas tree, the shape of fruit, the shape of leaves, the shape of stars, the shape of circles, or the like; wherein said at least one light source and preferred raw diode is encapsulated in the suitable material when the desired product is molded at the desired positions wherein a light source is desired;
(4) coincidently molding or subsequently forming at least one translucent preferably etched light scattering surface, groove or ridge within the perimeter of the ornament/design so as to defuse, refract, and otherwise disperse any incident light falling on or near said etched surface, groove or ridge; in one embodiment etching the material adjacent the perimeter of the shape of the ornament proximate at least one location and preferably at a second location, or for example in the case of a leaf providing the veining outline of a leaf in etched form, or as in the case of Santa Claus providing the facial characteristics with etching or alternatively with fruit providing the etching at the most optimal locations which beat simulates the fruit;
(5) preferably providing conductors to engage the at least one light source for providing power to the ornament/design;
wherein the light incident upon the translucent preferably etched light scattering surfaces, grooves , ridges or characteristics within the sign, design or ornament will scatter, disperse, refract or reflect enhancing the effective lighting and eye appeal of the design/ornament to a much greater extent than any substantially clear ornament; wherein the at least one light source is molded, encapsulated and fixed within the desired product . In essence therefore when the light source is an LED, and when the desired product is an ornament, the entire ornament formed may be consider as a large light emitting diode. Preferably the electrical connectors may be connected to the light source prior to the molding step which may involve the manufacture of several ornaments simultaneously.

In another embodiment the method is utilized to manufacture ornaments, for example for Christmas, Halloween or Valentine's Day in many suitable shapes such as in a shape of hearts, Christmas trees, pine cones, pineapples or the like of many different and combinations of colours and variations thereto which are adapted to be connected with a power supply in a modular fashion for example via plug connectors or the like which allows for simple changing of each ornament, for example the Christmas tree ornaments and their positions in an array.

### BRIEF DESCRIPTION OF THE DRAWINGS

Figure 1 is a schematic view of an ornament illustrated in a preferred embodiment of the invention.
Figure 2 is an alternative embodiment to Figure 1.
Figure 3 is a schematic illustration of various examples that the ornament may take illustrated in one embodiment of the invention.
Figure 4 illustrates a bottom end view of the ornament of Figure 1 illustrated in a preferred embodiment of the invention.
Figure 5 illustrates a schematic representation of the operation of the ornament of Figure 4 illustrated in a preferred embodiment of the invention.
Figure 6 is an alternative embodiment to Figure 4.
Figure 7 is an alternative embodiment illustrating universal symbols.
Figure 8 is an alternative embodiment which does not form part of the present invention as now claimed utilized to replace neon signs and the like.
Figure 9 is an alternative embodiment to Figure 1.
Figure 10 is an illustration of a string of Christmas lights showing various forms of the ornaments and illustrated in an alternative embodiment of the invention.
Figure 11 is an electrical schematic depicting how the invention may be powered in various embodiments.
Figure 12 is a schematic set of views A, B, C and D which illustrate in one embodiment of the invention the details of the etching of the surface of the ornament which may or may not include a reflective panel.
Figure 13 is a further view of an ornament which might be manufactured according to the teachings of Figure 12 illustrated in one embodiment of the invention.
Figure 14 is a schematic view of a display sign which does not form part of the present invention as now claimed including reflective material therewith.
Figure 15 is a similar view to that of Figure 14 wherein the design is improved by having a reflective material placed behind the etched surface and illustrated in one embodiment of the invention.
Figure 16A, B and C is a schematic view of one embodiment of the invention having disposed therewith an ornament with more than one light emitting diode and further which may incorporate reflective material.
Figure 17 is a schematic view of the assembly of an edge lit sign including modular LEDs for inclusion with said sign and housing for said sign in one embodiment.
Figure 18 is a schematic view of a method of manufacturing the display sign which does not form part of the present invention as now claimed.
Figure 19 is a schematic view of a method of manufacturing ornaments in one aspect of the invention.

### DETAILIGHT SOURCE AND PREFERRED LED DESCRIPTION OF THE PREFERRED EMBODIMENTS

Referring generally to the figures, there is illustrated an ornament 5 in the various Figures 1, 2, 3, 6, 7 and 9 which includes a transparent matrix of material 10, preferably Lexan®, methylmethacrylate, acrylic or the like, of any colour or combination thereof, which has therein disposed an translucent light scattering etched surface 15 which may be etched using robotic methods to form a groove having side portions extending to a predetermined depth d as best seen in Figure 4. The groove and the wall surrounding the groove therefore are etched to become effectively translucent, while the balance of the matrix may remain transparent. The form of the design may therefore be at the pleasure of the manufacture. Various forms have been shown herein, but they are not considered to be limited in any sense. For example, in Figure 3, the forms of hearts, leaves, stars, bulbs, vegetables and the sun are illustrated as exemplary of the various forms which may be taken. The ornaments may be formed by cutting them from sheet material or from molding thermoplastic materials into the various shapes. The ornaments as formed, or thereafter are etched in predetermined manners either robotically or when formed by providing an etched surface, or design. The desired etched surfaces would therefore have to be provided as features within the mold so that the surfaces when separated from the mold will be etched, such as the details of the veining of a leaf, and the details in the heart as illustrated. These features can be provided with the mold which have predetermined serrations or the like so that the ultimate final product results in the translucent surfaces of the etched veins and the like.

Referring to Figures 4 and 5, there is illustrated the ornament of Figure 1 wherein the groove 15 is cut into the surface of the matrix 10, a predetermined depth d. When light incident on the groove therefore strikes the etching and the translucent surfaces, the light is dispersed at 26, although it may be incident in a single beam 25, so that the observer at position E1 views an enhanced outline of the design on the ornament as opposed to the position E2 wherein a single incident ray 25 would be merely refracted at an angle from θ₁ to θ₂ at 25a.

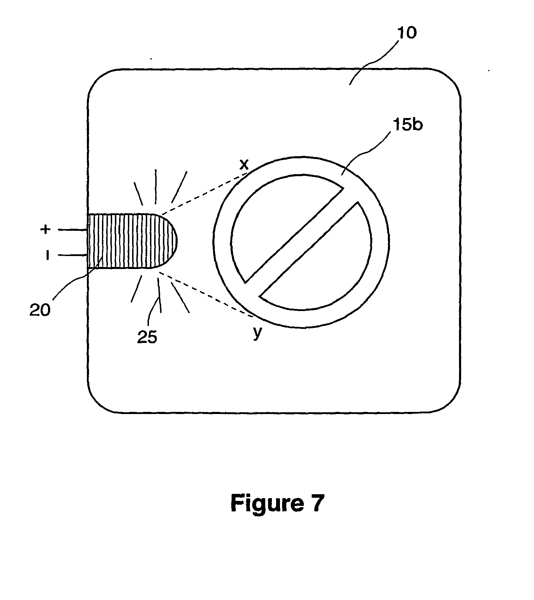

Figures 6 and 7 illustrate that the matrix may include a groove 15a or 15b of various outlines including lettering or international symbols such as "no smoking", "no entry" or the like. The light scattering groove providing the lettering or symbol may be formed as previously described. It is important that the LED or light source, if an alternative light source is selected, contained within said opening will direct light in a broad direction so that the light will shine up against all of the edges x and y at both sides of the, for example, "G" to enhance all edges of the lettering and not merely the one most adjacent to the. This comment rings true with all of the signs and ornaments taught herein. To avoid dark spots a sufficient number of LED's should be used consistent with the design and or message being displayed as best illustrated in Figure 8.

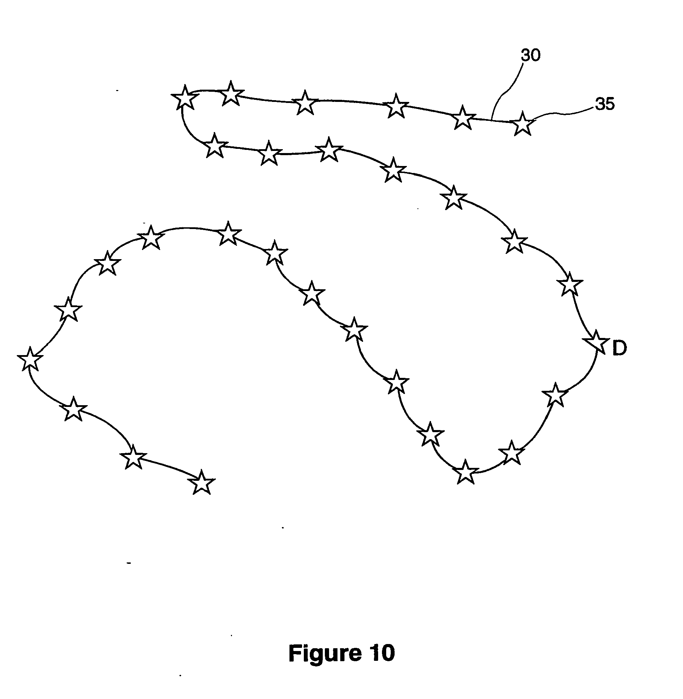

Referring now to Figure 9, the comments related to Figures 6 and 7 apply equally well to Figure 9. Figure 9 illustrates a holiday Easter symbol of a rabbit. It could equally be a Halloween pumpkin, a Santa Claus, a Star of David, crosses, crescent moon, or the like which may be individually utilized as an ornament or which may be strung together in a string of ornaments similar to that which is described in relation to Figure 10.

Referring to Figure 8, the same technology may be used for providing within the matrix 10a a message as "Fine Dining" at 15' which is enhanced by the LEDs 20a, 20b and 20c inserted within the edge of the matrix. The lettering may be provided either by etching robotically, mechanically by hand, through numerical control, by molding or any other known techniques.

Figure 10 illustrates an example of a string of ornaments embodying the invention which may be utilized during the holiday season. These ornaments are strung together utilizing pairs of leads extending from ornament to ornament, either in series or in parallel depending on the application. As a result, by providing a string of ornaments utilising the present invention, a much more reliable and aesthetically pleasing result is achieved with low maintenance. This holds true with any expression of the present invention, whether it be signs, ornaments or the like.

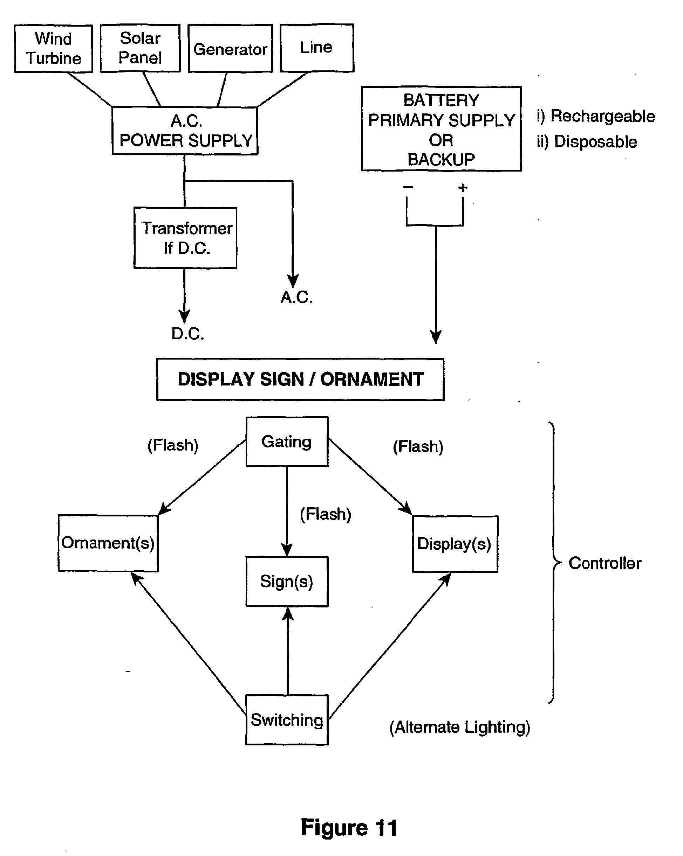

Referring now to Figure 11, there is illustrated an block diagram showing the various alternative power supplies for powering a set of ornaments, or various displays embodying the invention. The power may come from those sources already known in the art including alternating current from a power supply such as a wind turbine, a solar panel, a portable generator, or from line current depending on the location of the installation of the ornament set being used. In a more permanent situation a solar panel would be more suitable or alternatively a connection to a household current may be practical. Finally, for some situations, a battery current source may be more appropriate for example via a connector to a cigarette lighter type port for access to the 12 volt circuit of a car. A battery may be used as a back-up source of power for typical situations. Those skilled in the art will appreciate all the permantations and combinations possible. It may be necessary to gate the current if flashing is desired or provide some alternative type of switching if the ornament or display includes more than one coloured light emitting diode. In this matter, for example a Christmas ornament may light in one colour for a set period of time and then may be switched to light a second LED under the control of an inexpensive controller to change the colours displayed then perhaps alternatively flash depending on the sophistication of the sign. Many other configurations are possible as would be apparent to those skillight source and preferred LED in the art when reading this entire specification. No limitation is intended whatsoever.

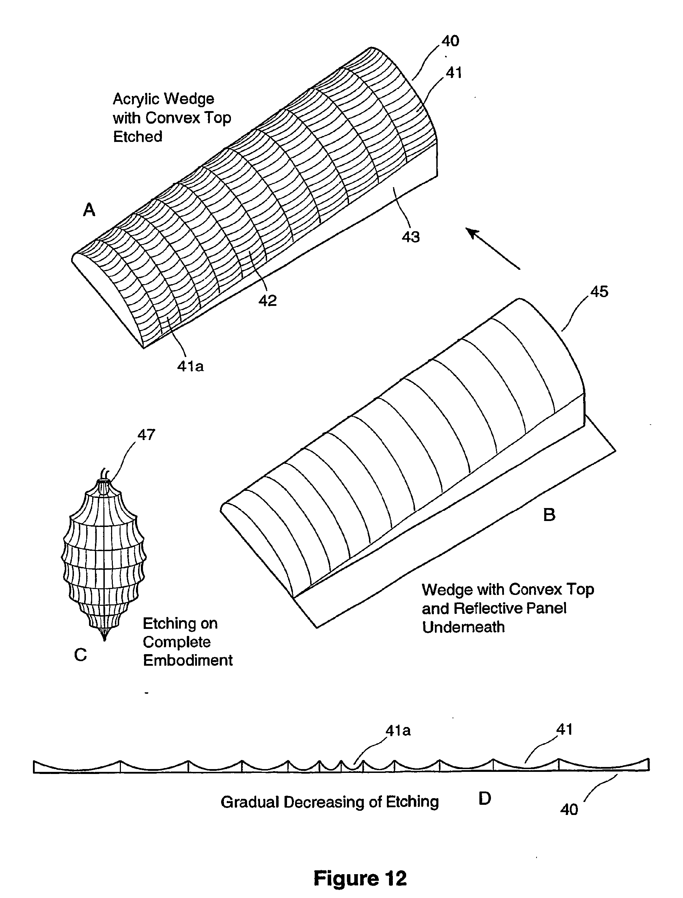

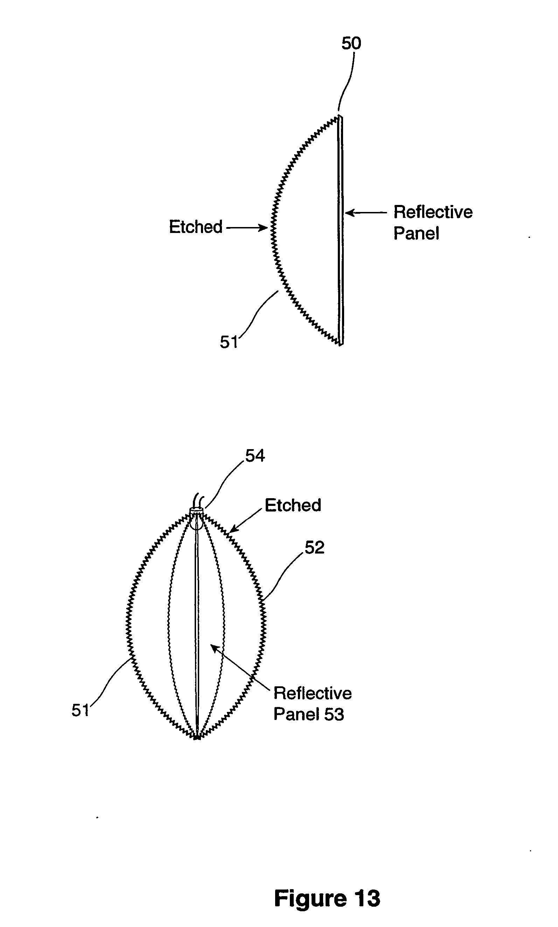

Referring now to Figure 12 there is provided an ornament 40 which resembles a pine cone as best seen in Figure 12C which includes a series of etched surfaces 41 which have alternating "wavelengths" as best seen in Figure 12D and which include within each segment 41A an etching 42 as illustrated within each segment 41. Alternatively a reflective panel 45 may be placed between two sections making up the ornament (if the invention is formed in this manner) which will be described in relation to Figure 13. Otherwise it may be made as one solid member as in Figure 12C with the surface being etched and with a light emitting diode 47 installight source and preferred LED at one end or alternatively at both ends. By etching the ornament of Figure 12 in the manner described in relation to Figure 12D wherein the etching "wavelength" is decreased or increased, a more pleasing and realistic looking ornament may be obtained.

Referring to Figure 13 an alternative to the construction of Figure 12C may be provided wherein a reflective panel 53 is contained between the two halves 51 and 52 bearing the etched surfaces of the ornament 50 wherein said reflective panel will improve the light dispersion on the translucent etched surfaces 51 and 52 of Figure 13 and portions 41 of Figure 12 in order to minimize dark spots.

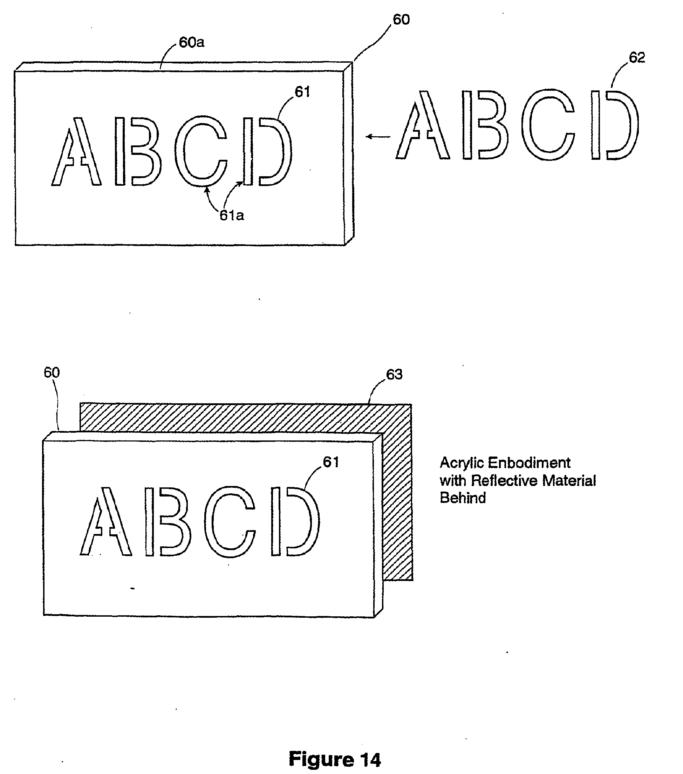

Referring now to Figure 14 there is illustrated a general schematic of a display sign 60 including characters 61 within display sign 60 manufactured from a clear transparent material, as described above, which may be of any colour and having a side edge 60a wherein the LED's may be disposed, whether formed therewith when the sign is made or otherwise included following manufacturing of the sign and openings for the LED's. The lettering 61 may be enhanced by providing compatibly located reflective materials 62 placed behind the lettering 61 so as to improve the amount of light reaching the translucent surfaces 61a of the lettering formed with the sign or when the sign is manufactured by the techniques described above. Alternatively, the sign 60 and lettering 61 may be enhanced for viewing by the public by providing a reflective material behind the sign to further enhance the dispersion of light within the said sign and to minimize dark spots.

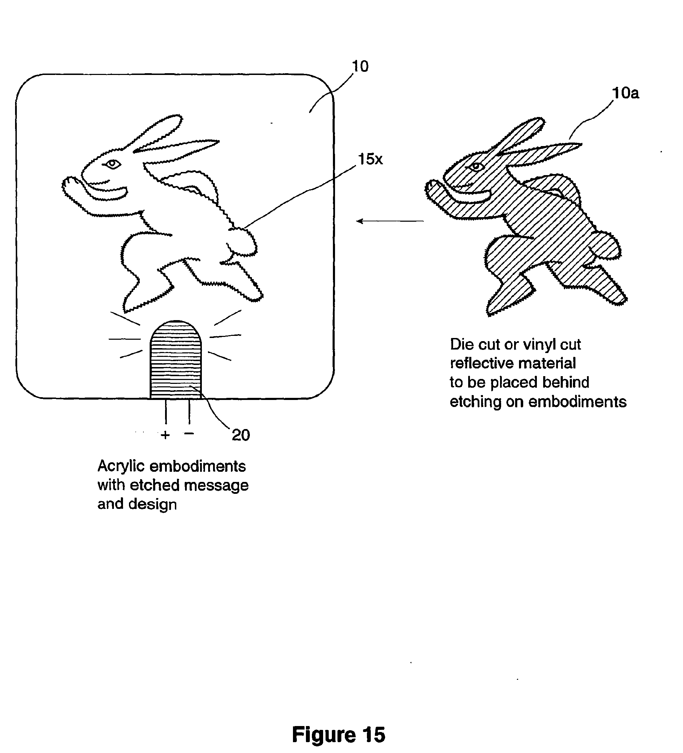

Figure 15 also provides an embodiment of display 10 illustrating a etched rabbit 15x having a translucent surface or outline and when light from said LED 20 strikes the etched surface 15x, a pleasing effect is achieved which may further be enhanced by the reflective material 10a outlining the shape of the rabbit which is be placed behind the etched surface of the rabbit of the design 10 to minimize dark spots and provide a more efficient ornament.

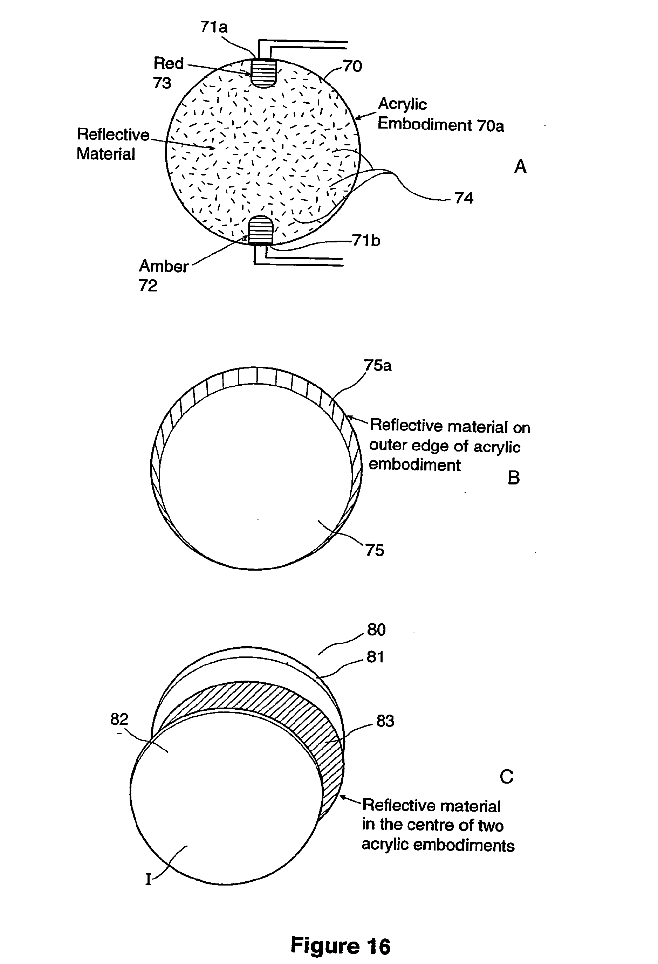

In another embodiment as shown best in Figure 16 light emitting diodes 71a and 71b are provided at each end of the ornament 70 made from acrylic 70a which includes flecks of metal 74 disposed within the acrylic material when the ornament 70 is formed. The LED's 71a and 71b will provide red light 73 therefrom or amber light 72 therefrom respectively which LED's may be light simultaneously to be melded together, or alternatively used or flashed or switched so that the ornament 70 may express various combinations of effects. These effects are also meant in this specification for all embodiment of the invention and not in a limiting sense. Reflective flecks 74 disposed within said ornament creates a further dispersion of the light which will be further dispersed by the translucent surfaces on the surface of the ornament as best seen in relation to Figure 13 to thereby minimize dark spots. The ornament therefore would include both the etched surface not shown in Figure 16 and the reflective flecks contained therein at 74 to improve the lighting characteristics of the ornament and obtaining a much more effective ornament in spite of the use of the low power consumption LEDs. In addition as shown in Figure 16B reflective material may be placed on the outer edge of the circular shaped embodiments of the ornament 70. In another embodiment in Figure 16C the ornament 80 includes two halves 82 and 81 wherein compatibly shaped reflective material 83 is contained there between wherein the image I which includes an etched or translucent surface is further enhanced by the reflective material which may be on both sides of material 83. Further an image I may be included on both halves 81 and 82 of the ornament 80.

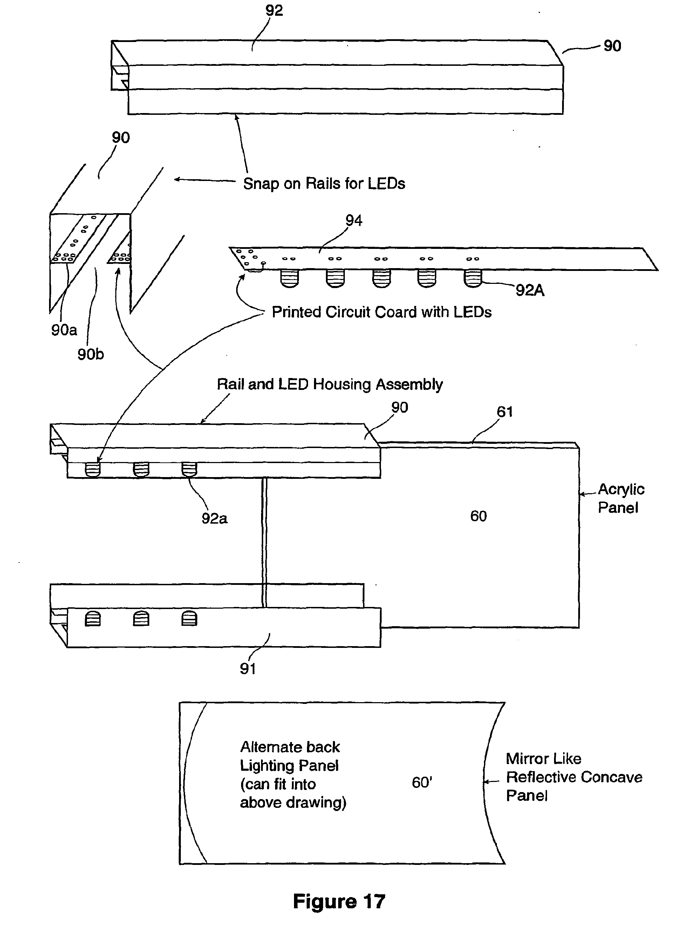

Referring now to Figure 17 there is illustrated a modular housing 90 which includes rail portions 91 and 92 provided at the bottom and at the top of the housing wherein LED circuit boards 94 including LED's 92a may be disposed within either the top or bottom or both the top and bottom rails 91 and 92. The board 94 is inserted into the space 90b with the side edges thereof resting on flanges 90a so that the circuit board directs the LED's proximate the edge 61 of the acrylic panel 60. The panel 60, as shown previously, may include an image or an alphanumeric set of characters in any language providing an emergency sign for example. The edges 61 at the top and bottom are to be light by the array of LED's on the printed circuit board 94 disposed within the rail 91 and 92 in space 90b.

Alternatively, openings may be provided in the panel 60 proximate the edges 61 as seen in Figure 8 to receive the LED's on the printed circuit board prior to being inserted within the rail 91 and 92. In a preferred embodiment a mirror like reflective panel(whether corrugated or flat) and preferably a concave panel 60' may be provided that fits into the housing 90 as well to further enhance the light emanating from the panel as previously described and the effectiveness and efficiency of the panel when viewed by a member of the public.

### EXAMPLES OF USES FOR THE INVENTION (All examples are to include a primary etched pattern, figure, message or the like with or without secondary light reflectors or flecks)

### For Garden and Landscaping Applications

1. Patio stones with built in light
2. Outside lighted steps
3. Lighted walkways
4. Lighted deck steps, posts and stairways
5. Lighted railings and banisters
6. Lighted welcome signs
7. Lighted decorative water fountains for indoor and outdoor
8. Lighted waterfalls
9. Lighted birdbaths
10. Swimming pool accent lighting
11. Lighted driveways and curbs
12. Lighted decorative rock lighting

### For Exterior Building Applications

1. Accent lighting for high-rise buildings
2. Lighted address numbers
3. Lighted signs for advertising and directional
4. Decorative lighting for building exteriors
5. Lighted perimeter flashing trim elements
6. Accent lighting for doors, windows and frames

### For Indoor Accent Lighting Applications

1. Lighted baseboards and nightlights
2. Lighted railings, stairs, picture frames, table tops, bar edges, counter tops, door handles and locks
3. Lighted floor tiles
4. Lighted bathroom ceramic
5. Lighted toilet seat
6. Accent lighting for glass partitions with sandblasted images
7. Lighted sports logos and mascots on novelty items and collector pieces
8. Stained Glass Backlighting (for lighting module with actual stained glass)

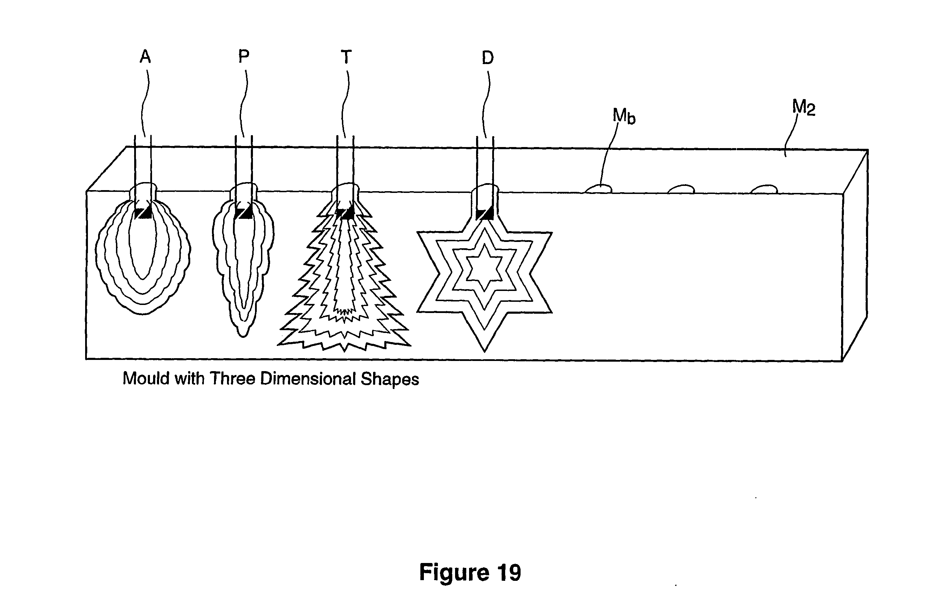

Referring to Figure 19 there is illustrated a mould (M₂) having openings (M_{b}) therein, each having the shape of a desired three dimensional ornament, such as the ornaments A, P, T and D as shown. The mould (M₂) includes two halves which may be separated with the raw diode being inserted separately into each of the openings for each particular desired ornament. The mould is then closed and the desired material, for example acrylic whether transparent or colored, may be pumped into the mould with the raw diodes being encapsulated by that material. When the moulds are opened the contacts shown in the figures connected to the raw diodes are then available for connection to known connecting sockets, etc. for arrays of lights.

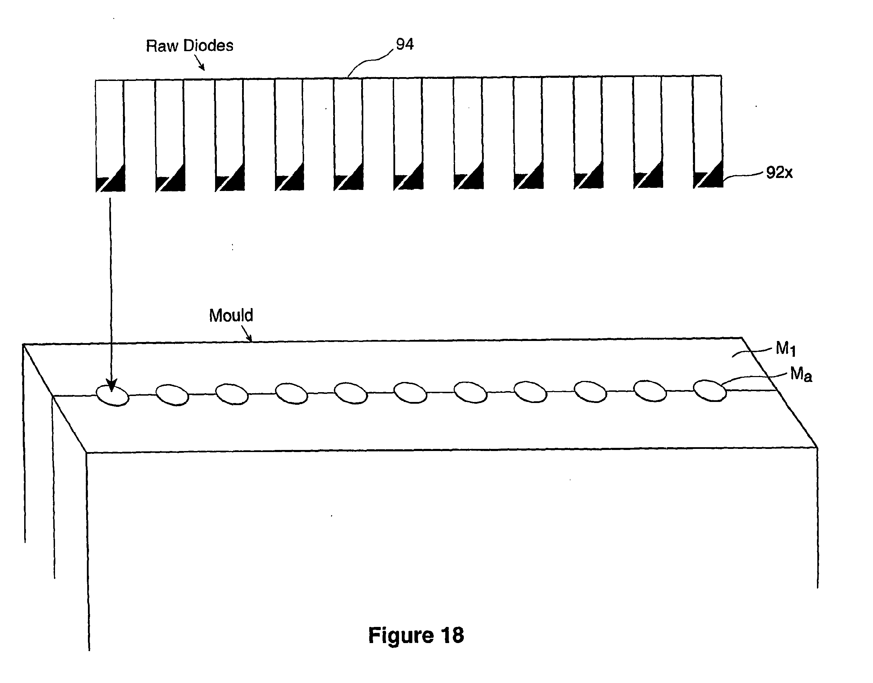

The methods illustrated in figure 18 and 19 are for the manufacturing of signs and ornaments moulded from a matrix of clear material such as acrylic, methylmethacrylate, Lexan® or the like.

The method includes the steps of:
(1) Identifying a suitable material to be used for molding the sign or ornament, and while molded also forming the translucent light scattering surface, groove, ridge or characteristic into the sign or ornament.
(2) Placing the raw diodes in a mold at the positions indicated in Figures 18 and 19 for the sign or ornament, wherein the internal surface of the mold is structured to form the final shape and characteristics of the desired product.
(3) Introducing said suitable material into said mold to form the sign or ornament taking various shapes illustrated and also rectangular or a bell shape, a Santa Claus shape, a cross shape, the shape of a bulb, the shape of a Christmas tree, the shape of fruit, the shape of leaves, the shape of stars, the shape of circles, or the like. The raw diodes are therefore encapsulated in the suitable material when the desired product is molded.
(4) The translucent light scattering characteristic if not molded may be otherwise formed following the molding step so as to defuse, refract, and otherwise disperse any incident light falling on or near said etched surface, groove, ridge or characteristic. For example in the case of a leaf providing the veining outline of a leaf in etched form, or as in the case of Santa Claus providing the facial characteristics with etching or alternatively with fruit providing the etching at the most optimal locations which best simulates the fruit.
(5) Providing conductors to engage the raw diodes as described above in relation to figures 18 and 19 for providing power to the sign/ornament/design.

Any light incident upon the translucent etched light scattering surfaces, grooves, ridges or characteristics within the sign, or ornament will scatter, disperse, refract or reflect enhancing the effective lighting and eye appeal of the sign and ornament to a much greater extent than any substantially clear ornament. Preferably the electrical connectors are connected to the raw diodes of figures 18 and 19 prior to the molding steps.

The method is also utilized to manufacture ornaments, for example for Christmas, Halloween or Valentine's Day in many suitable shapes such as in a shape of hearts, Christmas trees, pine cones, pineapples or the like of many different and combinations of colours and variations thereto which are adapted to be connected to the power supply in a modular fashion for example via plug connectors or the like which allows for simple changing of each ornament, for example the Christmas tree ornaments and their positions in an array.

The above listing of uses is not intended to be limiting in any way. Many changes can be made to the invention without departing from the scope thereof. It is intended that all material contained herein be interpreted as illustrative of the invention and not in a limiting sense.

## Claims

1. A string of ornaments (30) comprising molded decorative holiday ornaments (5) comprising a solid matrix (10) of material providing a body having a predetermined shape, said body having at least one light scattering translucent surface, groove, ridge or characteristic formed therein, said at least one translucent surface, grooves, ridge or characteristics providing a design, shape, or image, all formed by forming the surface, grooves, ridges or characteristics into the solid matrix of material of the body of the decorative holiday ornament, said body having disposed therein a molded opening having molded therein in use at least one light emitting diode, molded in place within the molded opening when the ornament is molded, said at least one light emitting diode including electrical leads extending to an electrical conductor, the solid matrix of material being transparent and coloured for a holiday season such as amber, red, green, blue, clear, purple, yellow, or orange or combinations thereof; said light emitting diode being positioned so as to light the decorative ornament, said light exiting the light emitting diode being dispersed by said light scattering translucent at least one surface, groove, ridge or characteristic so as to create a more uniform dispersion of the light from the decorative ornament as opposed to a point source of light, which dispersed light would remain undispersed had the surface, groove, ridge or characteristic not been provided.

2. The string of ornaments of claim 1 wherein said molded decorative holiday ornaments (5) are Christmas ornaments.

3. The string of ornaments of claim 1 wherein said light emitting diode in each said molded decorative holiday ornament is disposed proximate at least one side of the ornament.

4. The string of ornaments of claim 1 wherein said molded decorative holiday ornaments (5) are manufactured from polymethylmethacrylate, acrylic, resins, Lexan® or the like.

5. A string of ornaments according to claim 1 wherein each molded decorative holiday ornament comprises a body having provided therein a translucent light scattering surface, ridge or groove, and also containing secondary light scattering elements, said body containing at least one opening for at least one light emitting diode, molded therein at the same time as the holiday ornament is molded, which is positioned so as to light the body with the light exiting from the light emitting diode and being dispersed by said light scattering elements, and by said at least one translucent light scattering surface ridge or groove so as to create a dispersion of the light from the body which would remain undispersed had the translucent light scattering surface ridge or groove and the light scattering elements not been provided, so as to create a more uniform dispersion of the light from the decorative holiday ornament as opposed to a point source of light.

6. The string of ornaments of claim 1 or 5 wherein each molded decorative holiday ornament further comprises an outline of a figure or symbol, an animal figure, a religious symbol, a Cross, Star of David, Crescent Moon, stars, Santa Claus, a heart, a candle, a pine cone, a sphere, a hexagonal, a rectangle, a diamond, a pyramid, an animal shape, a reindeer, a lamb, or a camel.

7. The string of ornaments of claim 5 wherein said secondary light scattering elements further comprise metal shavings, or bubbles.

8. The string of ornaments of claim 6 or 7 wherein said body is in the shape of a pine cone with the surface of the pine cone shaped body being translucent and being formed or etched so as to simulate the appearance of the rough surface of the perimeter of an actual pine cone.

9. The string of ornaments of claim 1 or 5 wherein said molded decorative holiday ornaments are coloured amber, red, blue, green, turquoise, orange, purple, or combinations thereof.

10. The string of ornaments of claim 1 or 5 further comprising a company logo, a clip on personal safety light, a checker or chess piece that illuminates, toys or a necklace.

11. The string of ornaments of any previous claim further comprising LED's of at least one or more colours which in co-operation with a switching device changes the colour of the ornament, or sign over time.

12. The string of ornaments any one of claims 1 to 9 wherein a mirrored coating is placed on the molded decorative holiday ornaments during or after manufacturing.

13. The string of ornaments of any previous claim incorporated into a design selected from a group of designs including patio stones with built in lighting, lighted steps or walkways, posts and stairways, lighted railings and banisters, welcome signs, lighted decorative water fountains for indoors and outdoors, lighted waterfalls, lighted birdbaths, swimming pool accent lighting, lighted driveways and curbs, lighted decorative rock lighting, accent lighting for high-rise buildings, lighted address numbers, lighted signs for advertising and direction, decorative lighting for building exteriors, lighted perimeter flashing trim elements, accent lighting for doors, windows and frames, lighted baseboards and nightlights, lighted railings, stairs, picture frames, table tops, bar edges, counter tops, door handles and locks, lighted floor tiles, lighted bathroom ceramics, lighted toilet seat, accent lighting for glass partitions with sandblasted images, lighted sports logos and mascots on novelty items and collector pieces, stained glass backlighting (for lighting module with actual stained glass), lighted emergency - signs to replace flares for road closures and emergency situations, lighted name plates and trim and license plates for cars and trucks, safety lighting for cyclist, lighted street signs, lighted street names, lighted warning signs, or trouble light.

## Patentansprüche

1. Kette mit Schmuck bzw. Ornamenten bzw. Verzierungen (30), die umfasst: dekorative Festtagsformschmuckwaren (5), die ein festes bzw. massives Grundgerüst bzw. eine Grundmasse (10) aus Material umfassen, das einen Körper mit einer vorgegebenen Form bereitstellt, wobei der Körper zumindest eine lichtstreuende lichtdurchlässige Fläche, Rille, Erhöhung bzw. Kante oder Besonderheit darin ausgebildet hat, wobei die zumindest eine lichtdurchlässige Fläche, Rille, Erhöhung oder Besonderheit eine Gestaltung bzw. ein Design, eine Form oder ein Bild bereitstellt, die alle durch Ausbilden der Fläche, Rillen, Erhebungen oder Besonderheiten in dem Grundgerüst aus dem Körpermaterial des dekorativen Festtagsschmucks ausgebildet sind, wobei der Körper darin angeordnet eine darin geformte Formöffnung hat, die zumindest eine Leuchtdiode im Einsatz hat, die an Ort und Stelle in der Formöffnung ausgeformt wird, wenn der Schmuck geformt wird, wobei die zumindest eine Leuchtdiode elektrische Drähte umfasst, die sich zu einem elektrischen Leiter erstrecken, wobei das feste Grundgerüst aus Material für eine Festzeit bzw. Weihnachtszeit transparent und zum Beispiel bernsteinfarben, rot, grün, blau, durchsichtig, lila, gelb oder orange oder in Kombinationen davon gefärbt ist; wobei die Leuchtdiode derart positioniert ist, dass sie den dekorativen Schmuck erleuchtet, wobei das Licht, das die Leuchtdiode verlässt, zerstreut bzw. verteilt wird, indem die Lichtstreuung an der zumindest einen Fläche, Rille, Erhebung oder Besonderheit lichtdurchlässig ist, um im Gegensatz zu einer Punktlichtquelle eine gleichmäßigere Verteilung des Lichts von dem dekorativen Schmuck zu erzeugen, wobei dieses verteilte Licht unverteilt bliebe, wäre nicht die Fläche, Rille, Erhebung oder Besonderheit bereitgestellt.

2. Schmuckkette nach Anspruch 1, wobei die dekorativen Festtagsschmuckwaren (5) Weihnachtsschmuckwaren sind.

3. Schmuckkette nach Anspruch 1, wobei die Leuchtdiode in jedem dekorativen Festtagsschmuck (5) unmittelbar an zumindest einer Seite des Schmucks angeordnet ist.

4. Schmuckkette nach Anspruch 1. wobei die dekorativen Festtagsformschmuckwaren (5) aus Polymethylmethacrylat, Akryl, Harzen, Lexan® oder ähnlichem hergestellt sind.

5. Schmuckkette nach Anspruch 1, wobei jeder dekorative Festtagsformschmuck einen Körper umfasst, der darin eine lichtdurchlässige lichtstreuende Fläche, Erhöhung oder Rille bereitgestellt hat und auch sekundäre Lichtstreuelemente enthält, wobei der Körper zumindest eine Öffnung für die zumindest eine Leuchtdiode enthält, die zur gleichen Zeit darin geformt wird, zu der der Festtagsschmuck geformt wird, die derart angeordnet ist, dass sie den Körper mit dem aus der Leuchtdiode austretenden Licht beleuchtet, das von den Lichtstreuelementen und von der lichtdurchlässigen lichtstreuenden Flächenerhebung und/oder Rille verteilt wird, um eine Lichtverteilung von dem Körper zu erzeugen, die unverteilt bliebe, wären nicht die lichtdurchlässige lichtstreuende Flächenerhebung oder Rille und die lichtstreuenden Elemente bereitgestellt, um im Gegensatz zu einer Punktlichtquelle eine gleichmäßigere Verteilung des Lichts von dem dekorativen Festtagsschmuck zu erzeugen.

6. Schmuckkette nach Anspruch 1 oder 5, wobei jeder dekorative Festtagsformschmuck ferner einen Umriss bzw. eine Kontur einer Zahl oder eines Symbols, einer Tierfigur, eines religiösen Symbols, eines Kreuzes, eines Davidsterns, eines Halbmonds, von Sternen, des Weihnachtsmanns, eines Herzes, einer Kerze, eines Kiefernzapfens, einer Kugel, eines Sechskants, eines Dreiecks, einer Raute, einer Pyramide, einer Tierform, eines Rentiers, eines Lamms oder eines Kamels umfasst.

7. Schmuckkette nach Anspruch 5, wobei die sekundären Lichtstreuelemente ferner Metallschnipsel oder Blasen umfassen.

8. Schmuckkette nach Anspruch 6 oder 7, wobei der Körper die Form eines Kiefernzapfens hat, wobei der Oberfläche des Kiefernzapfen-förmigen Körpers lichtdurchlässig ist und derart ausgebildet oder geätzt ist, dass sie das Erscheinungsbild einer rauen Oberfläche des Umfangs eines echten Kiefernzapfens nachbildet.

9. Schmuckkette nach Anspruch 1 oder 5, wobei die dekorativen Festtagsformschmuckwaren bernsteinfarben, rot, blau, grün, türkis, orange, lila oder in Kombinationen davon gefärbt sind.

10. Schmuckkette nach Anspruch 1 oder 5, die ferner ein Firmenlogo, ein persönliches Aufstecksicherheitslicht, ein Schachbrettmuster oder eine Schachfigur, die leuchtet, Spielzeuge oder eine Halskette umfasst.

11. Schmuckkette nach einem der vorangehenden Ansprüche, die ferner LEDs mit zumindest einer oder mehreren Farben umfasst, die in Zusammenwirkung mit einer Schaltvorrichtung die Farbe des Schmucks oder Symbols mit der Zeit ändert.

12. Schmuckkette nach einem der Ansprüche 1 bis 9, wobei während oder nach der Herstellung eine verspiegelte Beschichtung auf den dekorativen Festtagsformschmuckwaren aufgebracht wird.

13. Schmuckkette nach einem der vorangehenden Ansprüche, die in eine Gestaltung eingearbeitet ist, die aus einer Gruppe von Gestaltungen ausgewählt ist, die umfasst: Innenhöfe bzw. Terrassen mit eingebauter Beleuchtung, beleuchtete Stufen oder Gehwege, Pfosten und Treppen, beleuchtete Relings und Geländer, Willkommensschilder, beleuchtete dekorative Wasserspringbrunnen für Innen und Außen, beleuchtete Wasserfälle, beleuchtete Vogeltränken, Swimmingpool-Akzentbeleuchtung, beleuchtete Auffahrten und Bordsteine, beleuchtete dekorative Felsbeleuchtung, Akzentbeleuchtung für Hochhausgebäude, beleuchtete Adressnummern, beleuchtete Schilder für Werbung und Wegweisung, dekorative Beleuchtung für Gebäudeaußenseiten, beleuchtete blinkende Umfangsdekorationselemente, Akzentbeleuchtung für Türen, Fenster und Rahmen, beleuchtete Fußleisten und Nachtlichter, beleuchtete Relings, Treppen, Bildrahmen, Tischplatten, Ausschankränder, Ladentischplatten, Türgriffe und Schlösser, beleuchtete Bodenfliesen, beleuchtete Badkeramiken, beleuchtete Toilettensitze, Akzentbeleuchtung für Glastrennwände mit sandgestrahlten Bildern, beleuchtete Sportlogos und Maskottchen auf Neuheitenobjekten und Sammlerstücken, Buntglashintergrundbeleuchtung (für Beleuchtungsmodul mit echtem Buntglas), beleuchtete Notfallsymbole bzw. Hinweise, um Leuchtsignale für Straßensperrungen und Notfallsituationen zu ersetzen, beleuchtete Namensschilder und Verkleidungs- und Nummernschilder für Autos und Lastwagen, Sicherheitsbeleuchtung für Radfahrer, beleuchtete Straßenschilder, beleuchtete Straßennamen, beleuchtete Warnschilder oder Arbeitsleuchten.

## Revendications

1. Chaîne d'ornements (30) comprenant des ornements festifs décoratifs moulés (5) comprenant une matrice solide (10) de matériau proposant un corps ayant une forme prédéterminée, ledit corps ayant au moins une surface, une rainure, une strie ou une caractéristique translucide de diffusion de la lumière formée dans celle-ci, ladite au moins une surface, rainures, strie ou caractéristiques translucides proposant un dessin, une forme ou une image, toutes formées en formant la surface, les rainures, les stries ou les caractéristiques dans la matrice solide de matériau du corps de l'ornement festif décoratif, ledit corps comprenant, disposée dans celui-ci, une ouverture moulée comprenant, moulée dans celle-ci, en fonctionnement au moins une diode électroluminescente, moulée en place à l'intérieur de l'ouverture moulée lorsque l'ornement est moulé, ladite au moins une diode électroluminescente comprenant des fils électriques s'étendant vers un conducteur électrique, la matrice solide de matériau étant transparente et colorée pour une saison festive comme l'ambre, le rouge, le vert, le bleu, l'incolore, le violet, le jaune ou orange ou des combinaisons de celles-ci ; ladite diode électroluminescente étant positionnée afin d'éclairer l'ornement décoratif, ladite lumière sortant de la diode électroluminescente étant dispersée par ladite au moins une surface, rainure, strie ou caractéristique translucide de diffusion de la lumière afin de créer une dispersion plus uniforme de la lumière depuis l'ornement décoratif par opposition à une source de lumière, dont la lumière dispersée resterait non dispersée si la surface, rainure, strie ou caractéristique n'était pas prévue.

2. Chaîne d'ornements selon la revendication 1 dans laquelle lesdits ornements festifs décoratifs moulés (5) sont des ornements de Noël.

3. Chaîne d'ornements selon la revendication 1 dans laquelle ladite diode électroluminescente dans chacun desdits ornements festifs décoratifs moulés est disposée à proximité d'au moins un côté de l'ornement.

4. Chaîne d'ornements selon la revendication 1 dans laquelle lesdits ornements festifs décoratifs moulés (5) sont fabriqués à partir de polyméthacrylate de méthyle, d'acrylique, de résines, de Lexan® ou similaire.

5. Chaîne d'ornements selon la revendication 1 dans laquelle chaque ornement festif décoratif moulé comprend un corps dans lequel est prévue surface, strie ou rainure de diffusion de la lumière, et contenant également des éléments de diffusion de la lumière secondaires, ledit corps contenant au moins une ouverture pour au moins une diode électroluminescente, moulée dans celui-ci en même temps que l'ornement festif est moulé, qui est positionnée afin d'éclairer le corps avec la lumière sortant de la diode électroluminescente et étant dispersée par lesdits éléments de diffusion de la lumière, et par ladite surface, strie ou rainure de diffusion de la lumière translucide afin de créer une dispersion de la lumière à partir du corps qui resterait non dispersée si la surface, strie ou rainure de diffusion de la lumière translucide et les éléments de diffusion de la lumière n'étaient pas prévus, afin de créer une dispersion plus uniforme de la lumière à partir de l'ornement festif décoratif par opposition à une source de lumière.

6. Chaîne d'ornements selon la revendication 1 ou 5 dans laquelle chaque ornement festif décoratif moulé comprend en outre un contour d'une figure ou d'un symbole, une figure animale, un symbole religieux, une croix, une étoile de David, un croissant de lune, des étoiles, le père Noël, un coeur, une bougie, un cône de pin, une sphère, un hexagone, un rectangle, un diamant, une pyramide, une forme animale, un renne, un agneau ou un chameau.

7. Chaîne d'ornements selon la revendication 5 dans laquelle lesdits éléments de diffusion de la lumière secondaires comprennent en outre des copeaux métalliques, ou des bulles.

8. Chaîne d'ornements selon la revendication 6 ou 7 dans laquelle ledit corps se présente sous la forme d'un cône de pin avec la surface du corps formé du cône de pin étant translucide et étant formée ou étirée afin de simuler l'aspect de la surface brute du périmètre d'un cône de pin réel.

9. Chaîne d'ornements selon la revendication 1 ou 5 dans laquelle lesdits ornements festifs décoratifs moulés sont colorés en ambre, rouge, bleu, vert, turquoise, orange, violet, ou des combinaisons de celles-ci.

10. Chaîne d'ornements selon la revendication 1 ou 5 comprenant en outre un logo de société, un clip sur l'éclairage de sécurité personnelle, un marqueur ou une pièce d'échiquier qui s'éclaire, des jouets ou un collier.

11. Chaîne d'ornements selon l'une quelconque des revendications précédentes comprenant en outre des diodes électroluminescentes d'au moins une ou plusieurs couleurs dans, en coopération avec un dispositif de commutation, change la couleur de l'ornement, ou signent dans le temps.

12. Chaîne d'ornements selon l'une quelconque des revendications 1 à 9 dans laquelle un revêtement en miroir est placé sur les ornements festifs décoratifs moulés pendant ou après la fabrication.

13. Chaîne d'ornements selon l'une quelconque des revendications précédentes intégrée dans une conception sélectionnée parmi un groupe de conception comprenant des patios avec un éclairage intégré, des marches ou des allées éclairées, des piliers ou des escaliers, des garde-corps ou des rampes, des panneaux de bienvenue, des fontaines à eau décoratives éclairées d'intérieur ou d'extérieur, des murs d'eau éclairés, des vasques pour oiseaux éclairés, l'éclairage décoratif pour piscine, des voies d'accès et virages éclairés, un phare décoratif éclairé, l'éclairage décoratif de bâtiments élevés, des numéros d'adresse éclairés, des panneaux éclairés de publicité et de direction, l'éclairage décoratif extérieur de bâtiments, des éléments de délimitation de périmètre éclairés, l'éclairage décoratif de portes, de fenêtres et de châssis, des plinthes et veilleuses éclairées, des garde-corps éclairés, des marches, des cadres, des bureaux, des bords de bar, des angles supérieurs, des poignées et serrures de portes, des dalles éclairées, des céramiques de salle de bains éclairées, des sièges de toilettes éclairées, l'éclairage décoratif de vitres avec des images en verre sablé, des logos et mascottes sportifs éclairés sur des articles novateurs et des pièces de collection, l'éclairage en contre-jour de vitrail (pour un module d'éclairage avec un véritable vitrail), des panneaux d'urgence éclairés pour remplacer les cônes en cas de fermeture de route ou de situations d'urgence, des plaques nominatives éclairées et des plaques de délimitation et de licence de voitures et de camions, l'éclairage de sécurité d'un cycliste, des panneaux de rue éclairés, des noms de rue éclairés, des panneaux d'avertissement éclairés ou une lampe baladeuse.
